# EUROPÄISCHE PATENTSCHRIFT

(11) **EP 2 601 088 B1**
(45) Veröffentlichungstag und Bekanntmachung des Hinweises auf die Patenterteilung: **02.07.2014**
(21) Anmeldenummer: 11720088.1
(22) Anmeldetag: 16.05.2011
(51) Int. Cl.: B61G 9/06, B61G 11/16, B60R 19/34

(54) **ENERGIEVERZEHRVORRICHTUNG INSBESONDERE FÜR EINE STOßSICHERUNG EINES SPURGEFÜHRTEN FAHRZEUGES**
ENERGY ABSORPTION DEVICE, IN PARTICULAR FOR A SHOCK ABSORBER OF A TRACK-GUIDED VEHICLE
DISPOSITIF D'ABSORPTION D'ÉNERGIE, EN PARTICULIER POUR UN DISPOSITIF D'ABSORPTION DES CHOCS D'UN VÉHICULE GUIDÉ

(30) Priorität: 06.08.2010 EP 10172194
(43) Veröffentlichungstag der Anmeldung: 12.06.2013
(73) Patentinhaber: Voith Patent GmbH, 89522 Heidenheim (DE)
(72) Erfinder: KONTETZKI, Arthur, 38259 Salzgitter-Bad (DE)
(74) Vertreter: Rupprecht, Kay
(86) Internationale Anmeldenummer: PCT/EP2011/057826
(87) Internationale Veröffentlichungsnummer: WO 2012/016723

(56) Entgegenhaltungen:
- EP-A1- 2 048 407
- EP-A1- 2 072 370
- DE-U1- 20 114 203
- NL-C2- 1 018 349

## Beschreibung

Die Erfindung betrifft eine Energieverzehrvorrichtung nach dem Oberbegriff des unabhängigen Patentanspruches 1.

Demnach betrifft die Erfindung eine Energieverzehrvorrichtung insbesondere für eine Stoßsicherung eines spurgeführten Fahrzeuges, wobei die Energieverzehrvorrichtung ein als Verformungsrohr ausgebildetes Energieverzehrelement sowie ein Gegenelement aufweist. Das Gegenelement wirkt derart mit dem Verformungsrohr zusammen, dass sich bei Überschreiten einer kritischen, in die Energieverzehrvorrichtung eingeleiteten Stoßkraft das Gegenelement und das Verformungsrohr unter gleichzeitigem Verzehr von zumindest einem Teil der in die Energieverzehrvorrichtung eingeleiteten Stoßenergie relativ zueinander aufeinander zu bewegen.

Unter dem hierin verwendeten Begriff "Gegenelement" ist grundsätzlich das Bauteil der Energieverzehrvorrichtung zu verstehen, welches beim Ansprechen der Energieverzehrvorrichtung eine plastische Deformation des Energieverzehrelements bewirkt. Das Gegenelement kann insbesondere einen Kegelring aufweisen oder als Kegelrihg ausgebildet sein, welcher beim Ansprechen der Energieverzehrvorrichtung in das als Verformungsrohr ausgebildete Energieverzehrelement hineingedrückt wird und das Verformungsrohr durch plastische Querschnittsaufweitung deformiert.

Eine Energieverzehrvorrichtung der zuvor genannten Art ist dem Prinzip nach allgemein aus dem Stand der Technik bekannt und wird beispielsweise in der Schienenfahrzeugtechnik insbesondere als Teil einer Stoßsicherung eingesetzt. Bei Schienenfahrzeugen besteht eine solche Stoßsicherung in der Regel aus einer Kombination einer Zug-/Stoßeinrichtung (beilspielsweise in Gestalt eines Federapparats) und einer Energieverzehrvorrichtung mit einem irreversiblen Energieverzehrelement, wobei das Energieverzehrelement dazu dient, das Fahrzeug insbesondere auch bei größeren Auffährgeschwindigkeiten zü schützen. Üblicherweise ist dabei vorgesehen, dass die Zug-/Stoßeinrichtung bis zu einer definierten Größe Zug- und Stoßkräfte aufnimmt und darüber hinaus gehende Kräfte zunächst in das Energieverzehrelement der Energieverzehrvorrichtung und die über das für die Energieverzehrvorrichtung bzw. das Energieverzehrelement der Energieverzehrvorrichtung ausgelegte Energieniveau hinausgehende Stoßenergie in das Fahrzeuguntergestell weiterleitet.

Mit einer Zug-/Stoßeinrichtung werden zwar Zug- und Stoßkräfte, welche während des normalen Fahrbetriebes etwa bei einem mehrgliedrigen Schienenfahrzeug beispielsweise zwischen den einzelnen Wagenkästen auftreten, in dieser in der Regel regenerativ ausgebildeten Zug-/Stoßeinrichtung absorbiert. Bei Überschreiten der Betriebslast der Zug-/Stoßeinrichtung hingegen, wie etwa beim Aufprall des Fahrzeuges auf ein Hindernis, wird die Zug-/Stoßeinrichtung und die ggf. vorgesehene Gelenk- oder Kupplungsverbindung zwischen den einzelnen Wagenkästen bzw. die Schnittstelle zwischen den einzelnen Wagenkästen möglicherweise zerstört oder beschädigt. Bei höheren Kollisionsenergien reicht die Zug-/Stoßeinrichtung allein nicht für einen Verzehr der insgesamt anfallenden Energie aus. Dadurch besteht die Gefahr, dass das Fahrzeuguntergestell bzw. der komplette Wagenkasten zum weiteren Energieverzehr herangezogen wird. Dabei wird dieses extremen Belastungen ausgesetzt und unter Umständen beschädigt oder gar zerstört. Bei Schienenfahrzeugen läuft in solch einem Fall das Fahrzeug Gefahr, zu entgleisen.

Mit dem Ziel, das Fahrzeuguntergestell gegen Beschädigungen bei starken Auffahrstößen zu schützen, kommt häufig zusätzlich zu der in der Regel regenerativ ausgebildeten Zug-/Stoßeinrichtung eine Energieverzehrvorrichtung mit einem destruktiv ausgebildeten Energieverzehrelement zum Einsatz, welches beispielsweise derart ausgelegt ist, dass es nach Ausschöpfung des Arbeitsverzehrs der Zug-/Stoßeinrichtung anspricht und die durch den Kraftfluss über das Energieverzehrelement übertragene Energie zumindest teilweise absorbiert und somit abbaut. Selbstverständlich ist es aber auch denkbar, dass keine regenerativ ausgebildeten Zug-/Stoßeinrichtung vorgesehen ist, und dass zum Schutz des Fahrzeuguntergestells gegen Beschädigungen bei Auffahrstößen eine alleinige Energieverzehrvorrichtung mit einem destruktiv ausgebildeten Energieverzehrelement zum Einsatz kommt.

Als Energieverzehrelement kommt insbesondere ein Verformungskörper in Frage, bei dem nach Überschreiten einer kritischen Druckkraft durch eine (gewollte) plastische Verformung in destruktiver Weise zumindest ein Teil der anfallenden Stoßenergie in Verformungsenergie und Wärme umgewandelt und somit "verzehrt" wird.

Ein Energieverzehrelement, in welchem zur Umwandlung der Stoßenergie beispielsweise ein Verformungsrohr verwendet wird, weist eine im Wesentlichen rechteckig verlaufende Kennlinie auf, wodurch nach dem Ansprechen des Energieverzehrelements eine maximale Energieaufnahme sichergestellt ist.

Die Druckschrift EP 2 048 407 A1 betrifft eine Absorptionseinheit für kinetische Energie für Kraftfahrzeuge, vor allem Personenkraftwagen, wobei die Absorptionseinheit ein Absorptionsrohr aufweist, bei dem mindestens eine äußere Schicht aus Kunststoff gebildet ist. Es ist ferner eine Rillenhalterung aus Metall vorgesehen, die mit Rillenelementen versehen ist. Das Absorptionsrohr und die Rillenhalterung der aus diesem Stand der Technik bekannten Absorptionseinheit sind derart angeordnet, dass bei Aufprall in Längsrichtung der Absorptionseinheit das Absorptionsrohr durch eine zentrale Öffnung der Rillenhalterung gedrückt wird.

Die Druckschrift EP 2 072 370 A1 betrifft eine Energieverzehrvorrichtung für einen Wagenkasten eines mehrgliedrigen Fahrzeuges, insbesondere Schienenfahrzeuges, wobei die Energieverzehrvorrichtung eine Dämpfungseinrichtung mit einem regenerativ ausgebildeten Dämpfungselement zum Abdämpfen von im normalen Fahrbetrieb auftretenden Zug- und Stoßkräften für die eine Energieverzehreinrichtung mit einem destruktiv ausgebildeten Energieverzehrelement aufweist. Das Energieverzehrelement ist ausgelegt, nach Überschreiten einer vorab festlegbaren kritischen Stoßkraft anzusprechen und durch plastische Verformung zumindest einen Teil der über die Energieverzehrvorrichtung übertragenen Stoßkräfte in Wärme- und Verformungsarbeit umzuwandeln und somit zu verzehren. Bei der Energieverzehrvorrichtung aus diesem Stand der Technik ist insbesondere vorgesehen, dass die Dämpfungseinrichtung in der Energieverzehreinrichtung derart integriert ist, dass bei einer Übertragung von Stoßkräften der Kraftfluss sowohl durch die Dämpfungseinrichtung als auch das Energieverzehrelement läuft.

Eine weitere Energieverzehrvorrichtung für Fahrzeuge ist aus der Druckschrift NL 1 018 349 C2 bekannt.

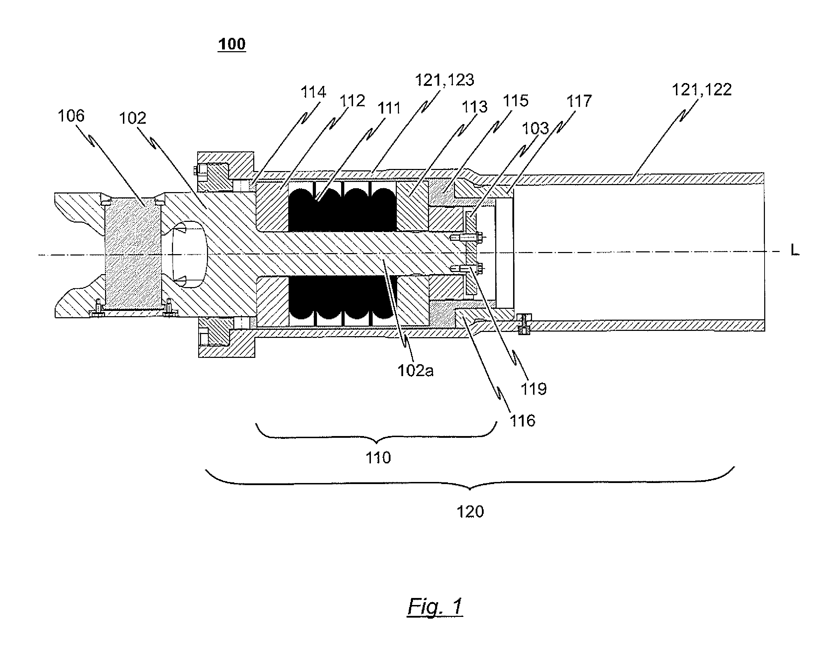

In Fig. 1 ist in einer längsgeschnittenen Darstellung schematisch eine Stoßsicherung 100 dargestellt, welche eine Zug-/Stoßeinrichtung 110 mit einem regenerativ ausgebildeten Federapparat einerseits und eine aus dem Stand der Technik bekannte Energieverzehrvorrichtung 120 mit einem irreversiblen Energieverzehrelement 121 andererseits aufweist. Die in Fig. 1 schematisch dargestellte Stoßsicherung 100 ist in einer Kupplungsstange einer Mittelpufferkupplung integriert.

Bei der dargestellten Ausführungsform ist die Zug-/Stoßeinrichtung 110 der Stoßsicherung 100 in Gestalt einer Dämpfungseinrichtung mit regenerativ ausgebildeten Federelementen 111 ausgeführt, wobei die Federelemente 111 zum Abdämpfen von im normalen Fahrbetrieb auftretenden Zug- und Stoßkräfte dienen. Die im normalen Fahrbetrieb auftretenden Zug- und Stoßkräfte werden bei der in Fig. 1 dargestellten Stoßsicherung 100 über ein Kraftübertragungselement 102 in die als Dämpfungseinrichtung ausgeführte Zug-/Stoßeinrichtung 110 eingeleitet. Das Kraftübertragungselement 102 ist bei der in Fig. 1 dargestellten Stoßsicherung 100 an seinem kupplungsebenenseitigen Ende als Gabel ausgebildet, welche dazu dient, ein entsprechend komplementär ausgebildetes Auge beispielsweise einer (in Fig. 1 nicht explizit dargestellten) Gelenkanordnung aufzunehmen. Die Gabel und das in der Gabel aufgenommene Auge werden über ein Schwenkbolzen 106 in horizontaler Ebene schwenkbeweglich gelagert.

Wie bereits angedeutet weist die in Fig. 1 schematisch dargestellte Stoßsicherung 100 zusätzlich zu der als Dämpfungseinrichtung ausgeführten Zug-/Stoßeinrichtung 110 eine Energieverzehrvorrichtung 120 mit einem destruktiv ausgebildeten Energieverzehrelement 121 auf. Die Energieverzehrvorrichtung 120 dient dazu, nach Überschreiten einer vorab festlegbaren kritischen Stoßkraft anzusprechen und durch plastische Verformung des Energieverzehrelements 121 zumindest einen Teil der über die Energieverzehrvorrichtung 120 übertragenen Stoßkräfte in Wärme und Verformungsarbeit umzuwandeln und somit zu verzehren.

Wie in Fig. 1 dargestellt, ist das Energieverzehrelement 121 als Verformungsrohr ausgebildet, welches einen wagenkastenseitigen ersten Verformungsrohrabschnitt 122 und einen gegenüberliegenden zweiten Verformungsrohrabschnitt 123 aufweist. Der zweite Verformungsrohrabschnitt 123 weist einen im Vergleich zum ersten Verformungsrohrabschnitt 122 aufgeweiteten Querschnitt auf. Die als Dämpfungseinrichtung ausgeführte Zug-/Stoßeinrichtung 110 ist vollständig in dem zweiten Verformungsrohrabschnitt 123 des Energieverzehrelements 121 aufgenommen und somit darin integriert.

Die Dämpfungseinrichtung weist eine erste Druckplatte 112 und eine zweite Druckplatte 113 auf, zwischen welchen die Federelemente 111 des Federapparates angeordnet sind. Beim Einleiten von im normalen Fahrbetrieb auftretenden Zug- und Stoßkräfte über das Kraftübertragungselement 102 in die Stoßsicherung 100 bzw. in die als Dämpfungseinrichtung ausgebildete Zug-Stoßeinrichtung 110 werden die beiden Druckplatten 112, 113 unter gleichzeitiger Verkürzung des Abstandes zwischen ihnen in Längsrichtung der Zug-Stoßeinrichtung 110 relativ zueinander verschoben. Als mechanische Hubbegrenzung sind ein der ersten Druckplatte 112 zugeordneter erster Anschlag 114 und ein der zweiten Druckplatte 113 zugeordneter zweiter Anschlag 115 vorgesehen. Über diese beiden Anschläge 114, 115 wird die Längsverschiebbarkeit der beiden Druckplatten 112, 113 begrenzt.

Das Kraftübertragungselement 102, über welches Zug- und Stoßkräfte in die als Dämpfungseinrichtung ausgebildete Zug-Stoßeinrichtung 110 eingeleitet werden, weist einen wagenkastenseitigen Endabschnitt 102a auf, welcher durch die erste Druckplatte 112, die Federelemente 111 des Federapparates und die zweite Druckplatte 113 hindurch läuft und an seinem wagenkastenseitigen Ende ein Konterelement 103 aufweist. Das Konterelement 103 wirkt zumindest bei einer Zugkraftübertragung mit der zweiten Druckplatte 113 zusammen, um Zugkräfte von dem Kraftübertragungselement 102 auf die zweite Druckplatte 113 zu übertragen. Das Konterelement 103 ist bei der in Fig. 1 dargestellten Ausführungsform über eine Schraubverbindung 119 mit dem wagenkastenseitigen Endabschnitt 102a des Kraftübertragungselements 102 verbunden.

Am Übergang zwischen dem ersten und dem zweiten Verformungsrohrabschnitt 122, 123 ist ein Kegelring 116 vorgesehen, der derart mit dem zweiten Anschlag 115 zusammenwirkt, dass die bei einer Stoßkraftübertragung von der zweiten Druckplatte 113 auf den zweiten Anschlag 115 übertragenen Kräfte über den Kegelring 116 auf den ersten Verformungsrohrabschnitt 122 übertragen werden. Der Kegelring 122 weist ein Führungselement 117 auf, welcher zumindest teilweise in den ersten Verformungsrohrabschnitt 122 hineinragt und an der Mantelinnenoberfläche des ersten Verformungsrohrabschnittes 122 anliegt.

Die in Fig. 1 dargestellte aus dem Stand der Technik bekannte Stoßsicherung 100 ist ausgelegt, die bei einer Stoßkraftübertragung anfallende Stoßenergie in mehreren Stufen abzubauen: Nach Ausschöpfung des Arbeitsverzehrs der in der Zug-/Stoß-einrichtung 110 vorgesehenen Federelemente 111 spricht die Energieverzehrvorrichtung 120 an. Dies erfolgt, indem der am Übergang zwischen dem ersten und dem zweiten Verformungsrohrabschnitt 122, 123 angeordnete Kegelring 116 in den ersten Verformungsrohrabschnitt 122 gedrückt wird. Infolgedessen wird der Querschnitt des ersten Verformungsrohrabschnittes 122 in plastischer Weise aufgeweitet, so dass zumindest ein Teil der übertragenen Stoßkräfte in Verformungsarbeit und Wärme umgewandelt wird.

Ein Nachteil der in der Stoßsicherung 100 gemäß Fig. 1 zum Einsatz kommenden Energieverzehrvorrichtung 120 ist darin zu sehen, dass die herkömmliche Energieverzehrvorrichtung 120 in erster Linie lediglich für axial in die Stoßsicherung 100 eingeleitete Stoßkräfte ausgelegt ist. Nur bei einer axialen Stoßkrafteinleitung ist mit der herkömmlichen Energieverzehrvorrichtung 120 ein gemäß einem vorhersehbaren Ereignisablauf stattfindender Energieverzehr möglich. Dies ist jedoch nicht mehr gewährleistet, wenn in Bezug auf die Längsachse L des Energieverzehrelements 121 schräge, d.h. nicht-axiale Stöße in die Energieverzehrvorrichtung 120 eingeleitet werden, was beispielsweise dann der Fall ist, wenn ein mit der Energieverzehrvorrichtung 120 ausgerüstetes Schienenfahrzeug während einer Kurvenfahrt auf ein Hindernis stößt. Bei Einleitung von nicht-axialen Stößen in die Energieverzehrvorrichtung 120 besteht insbesondere die Gefahr, dass die sich bei der plastischen Deformation des als Verformungsrohr ausgebildeten Energieverzehrelements 121 zwangsläufig im Verformungsrohrmaterial ausbildenden Risse keinen gradlinigen Verlauf parallel zur Längsachse L des Verformungsrohres 121 aufweisen. Vielmehr können sich willkürliche, im Hinblick auf die Längsachse L des Energieverzehrelements 121 schräg verlaufende Risse im Verformungsrohrmaterial ausbilden, infolgedessen der Ablauf des Energieverzehrs nicht mehr exakt vorhersehbar ist.

Auf Grundlage dieser Problemstellung liegt der Erfindung die Aufgabe zugrunde, eine Energieverzehrvorrichtung der eingangs genannten Art, und wie sie beispielsweise bei der in Fig. 1 dargestellten Stoßsicherung 100 zum Einsatz kommt, derart weiterzubilden, dass auch bei einer nicht-axialen Krafteinleitung ein nach einem vorhersehbaren Ereignisablauf stattfindender Energieverzehr realisierbar ist.

Diese Aufgabe wird erfindungsgemäß durch den Gegenstand des unabhängigen Patentanspruches 1 gelöst.
Somit wird eine erfindungsgemäße Energieverzehrvorrichtung bereitgestellt, insbesondere für eine Stoßsicherung (100) eines spurgeführten Fahrzeuges, mit einem als Verformungsrohr (1) ausgebildeten Energieverzehrelement und einem derart mit dem Verformungsrohr (1) zusammenwirkenden Gegenelement (5), dass sich bei Überschreiten einer kritischen, in die Energieverzehrvorrichtung (20) eingeleiteten Stoßkraft das Gegenelement (5) und das Verformungsrohr (1) unter gleichzeitigem Verzehr von zumindest einem Teil der in die Energieverzehrvorrichtung (20) eingeleiteten Stoßenergie relativ zueinander aufeinander zu bewegen, wobei das Verformungsrohr (1) einen ersten Verformungsrohrabschnitt (2) und einen gegenüberliegenden zweiten Verformungsrohrabschnitt (4) aufweist, wobei der zweite Verformungsrohrabschnitt (4) mit einem im Vergleich zum ersten Verformungsrohrabschnitt (2) aufgeweiteten Querschnitt versehen ist, und wobei das Gegenelement (5) zumindest teilweise in dem zweiten Verformungsrohrabschnitt (4) aufgenommen ist, wobei das Gegenelement (5) mit dem Verformungsrohr (1) über eine in Umfangsrichtung des Verformungsrohres (1) formschlüssige Verbindung verbunden ist zum Verhindern einer Verdrehung des Gegenelements (5) relativ zu dem Verformungsrohr (1), wobei auf der Mantelinnenoberfläche des Verformungsrohres (1) zumindest bereichsweise mindestens eine parallel zur Längsachse (L) des Verformungsrohres (1) verlaufende Vertiefung (6), insbesondere Nut oder Rille, vorgesehen ist, zum Ausbilden einer formschlüssigen Verbindung mit einer an dem Gegenelement (5) vorgesehenen, komplementär zu der Vertiefung (6) ausgebildeten Schiene (7'), insbesondere Passfeder, oder wobei auf der Mantelinnenoberfläche des Verformungsrohres (1) zumindest bereichsweise mindestens eine parallel zur Längsachse (L) des Verformungsrohres (1) verlaufende Schiene (7), insbesondere Passfeder, vorgesehen ist, zum Ausbilden einer formschlüssigen Verbindung mit einer in dem Gegenelement (5) ausgebildeten, komplementär zu der Schiene (7) ausgebildeten Vertiefung (6'), insbesondere Nut oder Rille, oder wobei auf der Mantelinnenoberfläche des Verformungsrohres (1) zumindest bereichsweise eine Riffelung mit parallel zur Längsachse (L) des Verformungsrohres (1) verlaufenden Vertiefungen (6) in Gestalt von Riffeln vorgesehen ist, zum Ausbilden einer formschlüssigen Verbindung mit einer an dem Gegenelement (5) vorgesehenen, komplementären Riffelung.

Mit Hilfe dieser formschlüssigen Verbindung kann in einer effektiven Weise ein Verdrehen des Gegenelements relativ zu dem Verformungsrohr verhindert werden. Durch das Vorsehen einer derartigen Verdrehsicherung wird die Stabilität der Energieverzehrvorrichtung gegen seitliche, d.h. nicht-axiale, Stoßkräfte erhöht. Insbesondere wird erreicht, dass auch beim Einleiten von nicht-axialen Stoßkräften ein Verkeilen des Gegenelements mit dem Verformungsrohr wirksam verhindert werden kann, wenn das Gegenelement nach Ansprechen der Energieverzehrvorrichtung in das Verformungsrohr hineingedrückt wird. Die in Umfangsrichtung des Verformungsrohres formschlüssige Verbindung zwischen dem Gegenelement und dem Verformungsrohr dient gleichzeitig auch als axiale Führung zum Führen der Relativbewegung des Gegenelements und des Verformungsrohres bei Ansprechen der Energieverzehrvorrichtung.

Beispielsweise ist es denkbar, dass auf der Mantelinnenoberfläche des Verformungsrohres zumindest bereichsweise mindestens eine parallel zur Längsachse des Verformungsrohres verlaufende Vertiefung vorgesehen ist, und dass an dem Gegenelement eine komplementär zu der Vertiefung ausgebildete Schiene vorgesehen ist, wobei diese Schiene mit der Vertiefung eine formschlüssige Verbindung ausbildet. Alternativ oder zusätzlich hierzu ist es denkbar, dass auf der Mantelinnenoberfläche des Verformungsrohres zumindest bereichsweise mindestens eine parallel zur Längsachse des Verformungsrohres verlaufende Schiene vorgesehen ist, und dass in dem Gegenelement eine komplementär zu der Schiene ausgebildete Vertiefung ausgebildet ist, um die formschlüssige Verbindung auszubilden.

Unter dem hierin verwendeten Begriff "Vertiefung" ist insbesondere eine Nut oder eine Rille zu verstehen. Unter dem Begriff "Schiene" ist allgemein ein vorspringender Bereich zu verstehen, wie beispielsweise eine Passfeder. Die Schiene kann eine beliebige Querschnittskonfiguration, wie beispielsweise eine rechteckige, dreieckige oder abgerundete Querschnittskonfiguration aufweisen und ist komplementär zu der Vertiefung ausgeführt.

Vorteilhafte Weiterbildungen der erfindungsgemäßen Energieverzehrvorrichtung sind in den abhängigen Ansprüchen angegeben.

Gemäß einer weiteren vorteilhaften Ausführungsform der erfindungsgemäßen Lösung weist das Verformungsrohr einen ersten Verformungsrohrabschnitt und einen gegenüberliegenden zweiten Verformungsrohrabschnitt auf, wobei der zweite Verformungsrohrabschnitt mit einem im Vergleich zum ersten Verformungsrohrabschnitt aufgeweiteten Querschnitt versehen ist, und wobei das Gegenelement zumindest teilweise in dem zweiten Verformungsrohrabschnitt aufgenommen ist. Demnach befindet sich das Gegenelement im Inneren des zweiten Verformungsrohrabschnittes und wird beim Ansprechen der Energieverzehrvorrichtung während des Verformungsprozesses im Verformungsrohr geführt.

Bei der erfindungsgemäßen Lösung ist vorgesehen, dass das Energieverzehrelement als Verformungsrohr ausgebildet ist, welches sich bei Überschreiten einer kritischen in das Energieverzehrelement eingeleiteten Stoßkraft vorzugsweise unter Querschnittserweiterung plastisch verformt und die Relativbewegung des Gegenelementes zulässt. Ein in Gestalt eines Verformungsrohres ausgebildetes Energieverzehrelement zeichnet sich dadurch aus, dass es eine definierte Ansprechkraft ohne Kraftspitzen aufweist. Aufgrund der im Wesentlichen rechteckig verlaufenden Kennlinie ist somit nach Ansprechen der Energieverzehrvorrichtung eine maximale Energieaufnahme sichergestellt.

Besonders bevorzugt wird beim Ansprechen der Energieverzehrvorrichtung das Verformungsrohr unter gleichzeitiger Querschnittserweiterung plastisch verformt. Selbstverständlich ist allerdings auch eine Energieaufnahme unter gleichzeitiger Querschnittsverringerung des Verformungsrohres denkbar; hierzu wäre es erforderlich, das Verformungsrohr durch eine entsprechende Düsenöffnung zu drücken, um die plastische Querschnittsverringerung bewirken zu können. Bei einem Verformungsrohr, welches sich beim Ansprechen der Energieverzehrvorrichtung unter Querschnittserweiterung plastisch verformt, kann jedoch verhindert werden, dass nach dem Verformen des Verformungsrohres dieses nicht aus der Energieverzehrvorrichtung ausgestoßen wird, was bei einer plastischen Verformung durch Querschnittsverringerung der Fall wäre. Aus diesem Grund wird derzeit die Ausführungsform mit dem unter Querschnittserweiterung verformbaren Verformungsrohr bevorzugt.

Bei der erfindungsgemäßen Lösung wird nach Ansprechen der Energieverzehrvorrichtung das in dem aufgeweiteten zweiten Verformungsrohrabschnitt aufgenommene Gegenelement in den ersten Verformungsrohrabschnitt gedrückt. Infolgedessen wird der Querschnitt des ersten Verformungsrohrabschnittes in plastischer Weise aufgeweitet, so dass zumindest ein Teil der bei der Stoßkraftübertragung in die Energieverzehrvorrichtung eingeleiteten Stoßenergie in Verformungsarbeit und Wärme umgewandelt wird. Um dabei ein Aufweiten des Querschnittes des ersten Verformungsrohrabschnittes in einer vorhersehbaren Weise realisieren zu können, weist das Gegenelement vorzugsweise einen Kegelring mit einer in Richtung des ersten Verformungsrohrabschnittes konisch zulaufenden Mantelfläche auf. Diese konisch zulaufende Mantelfläche des Kegelringes liegt beim Übergangsbereich (Schulterbereich) zwischen dem ersten Verformungsrohrabschnitt und dem zweiten Verformungsrohrabschnitt an der Mantelinnenoberfläche des Verformungsrohres an.

In einer bevorzugten Realisierung der erfindungsgemäßen Lösung ist vorgesehen, dass der Kegelring ein Führungselement aufweist, welcher zumindest teilweise in den ersten Verformungsrohrabschnitt hineinragt und an der Mantelinnenoberfläche des ersten Verformungsrohrabschnittes anliegt. Durch das Vorsehen eines derartigen Führungselements kann erreicht werden, dass beim Ansprechen der Energieverzehrvorrichtung die Bewegung des Gegenelementes mit dem Kegelring relativ zu dem ersten Verformungsrohrabschnitt nach einem vorab vorhersehbaren Ereignisablauf stattfindet, ohne dass dabei insbesondere ein Verkannten oder ein Verkeilen auftritt.

Besonders bevorzugt ist bei der zuletzt genannten Ausführungsform vorgesehen, dass der Führungsabschnitt ringförmig ausgebildet ist und eine Längsachse aufweist, die mit der Längsachse des Verformungsrohres übereinstimmt. Durch die ringförmige Konfiguration des Führungsabschnittes wird die zur Führung der Relativbewegung des Gegenelementes bereitstehende Führungsfläche maximiert. Insbesondere ist es von Vorteil, wenn der ringförmige Führungsabschnitt herangezogen wird, um die in Umfangsrichtung des Verformungsrohres formschlüssige Verbindung zwischen dem Gegenelement und dem Verformungsrohr auszubilden. So ist es beispielsweise denkbar, dass in dem ringförmigen Führungsabschnitt mindestens eine parallel zur Längsachse des Verformungsrohres verlaufende nutförmige Vertiefung vorgesehen ist, welche eine formschlüssigen Verbindung mit einem in der Mantelinnenoberfläche des ersten Verformungsrohrabschnittes vorgesehenen und parallel zur Längsachse des Verformungsrohres verlaufenden vorspringenden Bereich ausbildet, wobei der vorspringende Bereich komplementär zu der nutförmigen Vertiefung ausgebildet ist und als Schiene dient.

Gleichwohl ist es selbstverständlich auch denkbar, über die gesamte Mantelfläche des ringförmigen Führungsabschnittes eine Riffelung vorzusehen, wobei die einzelnen Riffel parallel zur Längsachse des Verformungsrohres ausgebildet sind. In diesem Fall sollte die Mantelinnenoberfläche des ersten Verformungsrohrabschnittes mit einer entsprechend komplementär ausgebildeten Oberflächenstruktur ausgebildet sein.

Durch eine geeignete Wahl der Wanddicke des Verformungsrohres und insbesondere des ersten Verformungsrohrabschnittes und/oder durch eine geeignete Wahl des Materials des Verformungsrohres bzw. des ersten Verformungsrohrabschnittes und/oder durch eine geeignete Wahl des mit dem Kegelring bewirkten Grades der Aufweitung des ersten Verformungsrohrabschnittes bei Ansprechen der Energieverzehrvorrichtung ist es möglich, vorab die für das Ansprechen der Energieverzehrvorrichtung kritische Stoßkraft festzulegen. In vorteilhafter Weise sollte diese kritische Stoßkraft in einer Größenordnung liegen, bei welcher beispielsweise die Dämpfungseigenschaft einer zusätzlich zu der Energieverzehrvorrichtung vorgesehenen Dämpfungseinrichtung ausgeschöpft ist.

Die Ansprechkraft und den mit der Energieverzehrvorrichtung maximal verzehrbaren Energiebetrag lassen sich vorab ferner festlegen und an bestimmte Anwendungen speziell anpassen, wenn das als Verformungsrohr ausgebildete Energieverzehrelement zwischen einem Anschlagelement einerseits und dem Gegenelement andererseits verspannt ist. Damit kann insbesondere eine spielfreie Integration der Energieverzehrvorrichtung beispielsweise in einer Stoßsicherung sichergestellt werden. Um eine geeignete Vorspannung auf das Verformungsrohr auszuüben und somit das Ansprechverhalten der Energieverzehrvorrichtung beeinflussen bzw. vorab festlegen zu können, ist es denkbar, ein Spannelement zu verwenden, welches einerseits mit dem Gegenelement und andererseits mit dem Anschlagelement verbunden ist und das Verformungsrohr zwischen dem Gegenelement und dem Anschlagelement einspannt, indem eine sowohl auf das Gegenelement als auch auf das Anschlagelement wirkende Zugkraft ausgeübt wird.

Die erfindungsgemäße Energieverzehrvorrichtung eignet sich insbesondere als Teil einer Stoßsicherung eines Schienenfahrzeuges. Beispielsweise ist es denkbar, dass die erfindungsgemäße Energieverzehrvorrichtung bei der zuvor unter Bezugnahme auf die Darstellung in Fig. 1 dargestellten Stoßsicherung 100 zum Einsatz kommt, wobei dann das herkömmliche Verformungsrohr 121 entfallen würde.

Nachfolgend wird eine Ausführungsform der Erfindung unter Bezugnahme auf die beiliegenden Zeichnungen näher beschrieben.

Es zeigen:
- Fig. 1: eine in einer Kupplungsstange eines spurgeführten Fahrzeuges integrierte Stoßsicherung in einer längsgeschnittenen Darstellung, wobei die Stoßsicherung eine aus dem Stand der Technik bekannte Energieverzehrvorrichtung aufweist; und
- Fig. 2: eine perspektivische, teilgeschnitte Darstellung einer Ausführungsform der erfindungsgemäßen Energieverzehrvorrichtung, welche sich insbesondere für den Einsatz in einer Stoßsicherung eignet.

In Fig. 1 ist in einer längsgeschnittenen Darstellung schematisch eine Stoßsicherung 100 dargestellt, welche eine Zug-/Stoßeinrichtung 110 mit einem regenerativ ausgebildeten Federapparat einerseits und eine aus dem Stand der Technik bekannte Energieverzehrvorrichtung 120 mit einem irreversiblen Energieverzehrelement 121 andererseits aufweist. Die in Fig. 1 schematisch dargestellte Stoßsicherung 100 ist in einer Kupplungsstange einer Mittelpufferkupplung integriert.

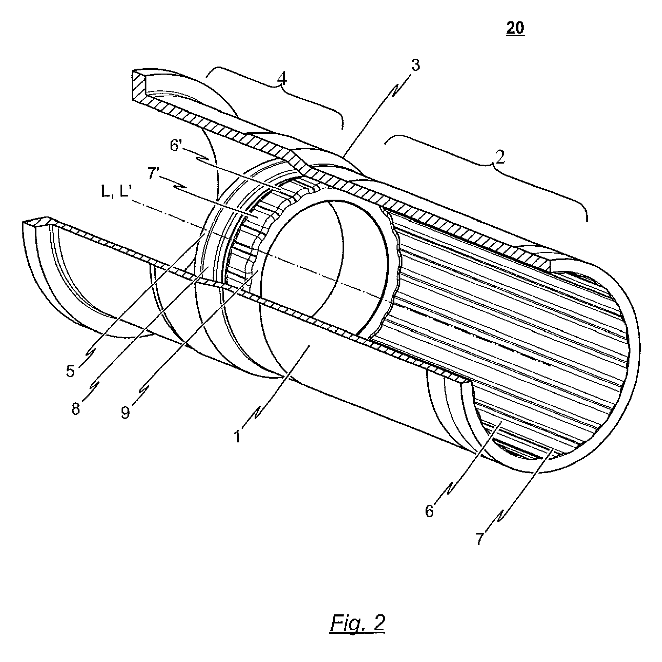

In Fig. 2 ist in einer perspektivischen, teilgeschnitten Darstellung eine Ausführungsform der erfindungsgemäßen Energieverzehrvorrichtung 20 dargestellt. Diese Energieverzehrvorrichtung 20 eignet sich beispielsweise als Teil der in Fig. 1 gezeigten Stoßsicherung 100.

Gemäß der Darstellung in Fig. 2 weist die exemplarische Ausführungsform der erfindungsgemäßen Energieverzehrvorrichtung 20 ein Energieverzehrelement in Gestalt eines Verformungsrohres 1 auf. Das Verformungsrohr 1 besteht aus einem ersten Verformungsrohrabschnitt 2 und einem gegenüberliegenden zweiten Verformungsrohrabschnitt 4. Der zweite Verformungsrohrabschnitt 4 weist einen im Vergleich zum ersten Verformungsrohrabschnitt 2 aufgeweiteten Querschnitt auf. Zwischen dem ersten Verformungsrohrabschnitt 2 und dem zweiten Verformungsrohrabschnitt 4 ist ein Schulterbereich 3 vorgesehen.

Die Energieverzehrvorrichtung 20 gemäß der in Fig. 2 dargestellten exemplarischen Ausführungsform weist zusätzlich zu dem Verformungsrohr 1 ein Gegenelement 5 auf, welches in dem zweiten Verformungsrohrabschnitt 4 mit dem aufgeweiteten Querschnitt aufgenommen ist. Das Gegenelement 5 weist einen Kegelring 8 mit einer in Richtung des ersten Verformungsrohrabschnittes 2 konisch zulaufenden Mantelfläche auf. Wie in Fig. 2 dargestellt, liegt diese konisch zulaufende Mantelfläche des Kegelringes 8 beim Schulterbereich 3 an der Mantelinnenoberfläche des Verformungsrohres 1 an.

Der Kegelring 8 ist ferner mit einem Führungselement 9 versehen, welches an der Mantelinnenoberfläche des ersten Verformungsrohrabschnittes 2 anliegt. Im Einzelnen ist bei der dargestellten Ausführungsform das Führungselement 9 ringförmig ausgebildet und weist eine Längsachse L' auf, die mit der Längsachse L des Verformungsrohres 1 übereinstimmt.

Das Verformungsrohr 1 ist derart ausgebildet, dass es sich bei Überschreiten einer in das Verformungsrohr 1 eingeleiteten kritischen Stoßkraft unter Querschnittserweiterung plastisch verformt, wobei sich dabei das Gegenelement 5 mit dem Kegelring 8 und dem Führungselement 9 relativ zu dem Verformungsrohr 1 in Richtung des ersten Verformungsrohrabschnittes 2 bewegt. Vorzugsweise ist die für das Ansprechen des Verformungsrohres 1 charakteristische Stoßkraft durch die Wandstärke und/oder das Material des Verformungsrohres 1 und/oder über den Grad der Aufweitung des Verformungsrohres 1 vorab einstellbar.

Bei der in Fig. 2 dargestellten exemplarischen Ausführungsform der erfindungsgemäßen Energieverzehrvorrichtung 20 ist das Gegenelement 5, und im Einzelnen das zum Gegenelement 5 gehörende Führungselement 9 über eine in Umfangsrichtung des Verformungsrohres 1 formschlüssige Verbindung mit dem Verformungsrohr 1 verbunden, um auf diese Weise insbesondere beim Ansprechen der Energieverzehrvorrichtung 20 eine Verdrehung des Gegenelementes 5 relativ zu dem Verformungsrohr 1 wirksam verhindern zu können. Die in Umfangsrichtung des Verformungsrohres 1 formschlüssige Verbindung wird durch eine Vielzahl von Vertiefungen 6 gebildet, welche in der Mantelinnenoberfläche des ersten Verformungsrohrabschnittes 2 ausgebildet sind und parallel zur Längsachse L des Verformungsrohres 1 verlaufen. Im Einzelnen weist die Mantelinnenoberfläche des ersten Verformungsrohrabschnittes 2 eine Riffelung auf, wobei die einzelnen Riffel (Vertiefungen 6) parallel zu der Längsachse L des Verformungsrohres 1 verlaufen.

Andererseits ist auch das Gegenelement 5, und im Einzelnen das ringförmig ausgebildete Führungselement 9, mit einer entsprechenden Riffelstruktur versehen. Die auf der Manteloberfläche des ringförmigen Führungselementes 9 ausgebildeten Riffel laufen parallel zu der Längsachse L des Verformungsrohres 1 und sind komplementär zu den in der Mantelinnenoberfläche des ersten Verformungsrohrabschnittes 2 vorgesehenen Riffel ausgebildet. Dadurch greifen die auf der Manteloberfläche des ringförmigen Führungselementes 9 ausgebildeten Riffel in die in der Mantelinnenoberfläche des ersten Verformungsrohrabschnittes 2 ausgebildeten Riffel formschlüssig ein und bewirken so eine Verdrehsicherheit des Gegenelementes 5 relativ zu dem Verformungsrohr 1. Gleichwohl dienen die Riffel als axiale Führungsmittel bei der Relativbewegung des Gegenelementes 5 und des Verformungsrohres 1. Im Einzelnen wird die in Umfangsrichtung des Verformungsrohres 1 formschlüssige Verbindung zwischen dem Verformungsrohr 1 und dem Gegenelement ausgebildet, einerseits indem die vorspringenden Bereiche (Schienen 7) der in der Mantelinnenoberfläche des ersten Verformungsrohrabschnittes 2 ausgebildeten Riffelung in die auf der Manteloberfläche des ringförmigen Führungselementes 9 ausgebildeten Vertiefungen 6' formschlüssig eingreifen, und andererseits indem die vorspringenden Bereiche (Schienen 7') der in der auf der Manteloberfläche des ringförmigen Führungselementes 9 ausgebildeten Riffelung in die in der Mantelinnenoberfläche des ersten Verformungsrohrabschnittes 2 ausgebildeten Vertiefungen 6 formschlüssig eingreifen.

Obwohl in Fig. 2 nicht explizit dargestellt, ist es selbstverständlich auch denkbar, dass auf der Mantelinnenoberfläche des Verformungsrohres 1 lediglich eine parallel zur Längsachse L des Verformungsrohres 1 verlaufende Vertiefung 6, beispielsweise in Gestalt einer Nut oder Rille, vorgesehen ist, um eine formschlüssige Verbindung mit einer an dem Gegenelement 5 vorgesehenen, komplementär zu der Vertiefung 6 ausgebildeten Schiene 7' auszubilden. Diese Schiene 7' kann insbesondere auch als Passfeder ausgeführt sein.

Die Schiene 7 bzw. der parallel zur Längsachse L des Verformungsrohres 1 verlaufende vorspringende Bereich kann einen rechteckigen, dreieckigen oder aber auch gerundeten Querschnitt aufweisen.

Die Erfindung ist nicht auf die zuvor unter Bezugnahme auf die Darstellung in Figur 2 dargestellte exemplarische Ausführungsform beschränkt, sondern ergibt sich aus einer Zusammenschau sämtlicher hierin offenbarter Merkmale.

### Bezugszeichenliste

- 1: Verformungsrohr
- 2: erster Verformungsrohrabschnitt
- 3: Schulterbereicht
- 4: zweiter Verformungsrohrabschnitt
- 5: Gegenelement
- 6, 6': Vertiefung
- 7, 7': vorspringender Bereich/Schiene
- 8: Kegelring
- 9: Führungselement
- 20: Energieverzehrvorrichtung
- 100: Stoßsicherung
- 102: Kraftübertragungselement
- 102a: wagenkastenseitiges Endabschnitt des Kraftübertragungselements
- 103: Konterelement
- 106: Bolzen
- 110: Zug-/Stoßeinrichtung
- 111: Federelement
- 112: erste Druckplatte
- 113: zweite Druckplatte
- 114: erster Anschlag
- 115: zweiter Anschlag
- 116: Kegelring (Stand der Technik)
- 117: Führungselement (Stand der Technik)
- 119: Schraubverbindung
- 120: Energieverzehrvorrichtung (Stand der Technik)
- 121: Energieverzehrelement (Stand der Technik)
- 122: erster Verformungsrohrabschnitt (Stand der Technik)
- 123: zweiter Verformungsrohrabschnitt (Stand der Technik)

- L: Längsachse des Verformungsrohres
- L': Längsachse des Führungselements

## Patentansprüche

1. Energieverzehrvorrichtung (20), insbesondere für eine Stoßsicherung (100) eines spurgeführten Fahrzeuges, mit einem als Verformungsrohr (1) ausgebildeten Energieverzehrelement und einem derart mit dem Verformungsrohr (1) zusammenwirkenden Gegenelement (5), dass sich bei Überschreiten einer kritischen, in die Energieverzehrvorrichtung (20) eingeleiteten Stoßkraft das Gegenelement (5) und das Verformungsrohr (1) unter gleichzeitigem Verzehr von zumindest einem Teil der in die Energieverzehrvorrichtung (20) eingeleiteten Stoßenergie relativ zueinander aufeinander zu bewegen,
wobei das Verformungsrohr (1) einen ersten Verformungsrohrabschnitt (2) und einen gegenüberliegenden zweiten Verformungsrohrabschnitt (4) aufweist, wobei der zweite Verformungsrohrabschnitt (4) mit einem im Vergleich zum ersten Verformungsrohrabschnitt (2) aufgeweiteten Querschnitt versehen ist, und wobei das Gegenelement (5) zumindest teilweise in dem zweiten Verformungsrohrabschnitt (4) aufgenommen ist, wobei das Gegenelement (5) mit dem Verformungsrohr (1) über eine in Umfangsrichtung des Verformungsrohres (1) formschlüssige Verbindung verbunden ist zum Verhindern einer Verdrehung des Gegenelements (5) relativ zu dem Verformungsrohr (1),
**dadurch gekennzeichnet, dass**
auf der Mantelinnenoberfläche des Verformungsrohres (1) zumindest bereichsweise mindestens eine parallel zur Längsachse (L) des Verformungsrohres (1) verlaufende Vertiefung (6), insbesondere Nut oder Rille, vorgesehen ist, zum Ausbilden einer formschlüssigen Verbindung mit einer an dem Gegenelement (5) vorgesehenen, komplementär zu der Vertiefung (6) ausgebildeten Schiene (7'), insbesondere Passfeder, oder wobei auf der Mantelinnenoberfläche des Verformungsrohres (1) zumindest bereichsweise mindestens eine parallel zur Längsachse (L) des Verformungsrohres (1) verlaufende Schiene (7), insbesondere Passfeder, vorgesehen ist, zum Ausbilden einer formschlüssigen Verbindung mit einer in dem Gegenelement (5) ausgebildeten, komplementär zu der Schiene (7) ausgebildeten Vertiefung (6'), insbesondere Nut oder Rille, oder wobei auf der Mantelinnenoberfläche des Verformungsrohres (1) zumindest bereichsweise eine Riffelung mit parallel zur Längsachse (L) des Verformungsrohres (1) verlaufenden Vertiefungen (6) in Gestalt von Riffeln vorgesehen ist, zum Ausbilden einer formschlüssigen Verbindung mit einer an dem Gegenelement (5) vorgesehenen, komplementären Riffelung.

2. Energieverzehrvorrichtung (20) nach Anspruch 1,
wobei die Schiene (7, 7') einen rechteckigen, dreieckigen oder abgerundeten Querschnitt aufweist.

3. Energieverzehrvorrichtung (20) nach Anspruch 1 oder 2,
wobei der erste Verformungsrohrabschnitt (2) über einen Schulterbereich (3) mit dem zweiten Verformungsrohrabschnitt (4) verbunden ist, und wobei das Gegenelement (5) einen Kegelring (8) mit einer in Richtung des ersten Verformungsrohrabschnittes (2) konisch zulaufenden Mantelfläche aufweist, welche beim Schulterbereich (3) an der Manfelinnenoberfläche des Verformungsrohres (1) anliegt.

4. Energieverzehrvorrichtung (20) nach Anspruch 3,
wobei der Kegelring (8) ein Führungselement (9) aufweist, welches an der Mantelinnenoberfläche des ersten Verformungsrohrabschnittes (2) anliegt.

5. Energieverzehrvorrichtung (20) nach Anspruch 4,
wobei das Führungselement (9) ringförmig ausgebildet ist und eine Längsachse (L') aufweist, die mit der Längsachse (L) des Verformungsrohres (1) übereinstimmt.

6. Energieverzehrvorrichtung (20) nach Anspruch 5,
wobei in dem ringförmigen Führungselement (9) mindestens eine parallel zur Längsachse (L) des Verformungsrohres (1) verlaufende nutförmige Vertiefung (6) vorgesehen ist zum Ausbilden einer formschlüssigen Verbindung mit einem in der Mantelinnenoberfläche des ersten Verformungsrohrabschnittes (2) vorgesehenen und parallel zur Längsachse (L) des Verformungsrohres (1) verlaufenden vorspringenden Bereiches, welcher komplementär zu der nutförmigen Vertiefung ausgebildet ist und als Schiene (7) dient.

7. Energieverzehrvorrichtung (20) nach einem der Ansprüche 1 bis 6,
wobei das Verformungsrohr (1) derart ausgebildet ist, dass es sich bei Überschreiten einer in das Verformungsrohr (1) eingeleiteten kritischen Stoßkraft unter Querschnittserweiterung plastisch verformt und die Relativbewegung des Verformungsrohres (1) und des Gegenelements (5) zulässt.

8. Energieverzehrvorrichtung (20) nach Anspruch 7,
wobei die für das Ansprechen des Verformungsrohres (1) charakteristische Stoßkraft durch die Wandstärke und/oder das Material des Verformungsrohres (1) und/oder über den Grad der Aufweitung des Verformungsrohres (1) vorab einstellbar ist.

9. Energieverzehrvorrichtung (20) nach einem der Ansprüche 1 bis 8,
wobei das Verformungsrohr (1) zwischen dem Gegenelement (5) und einem Anschlagelement über mindestens ein Spannelement derart verspannt ist, dass auf das Verformungsrohr (1) eine definierte Vorspannung ausgeübt wird, über welche das Ansprechverhalten der Energieverzehrvorrichtung (20) vorab festlegbar ist.

10. Energieverzehrvorrichtung (20) nach einem der Ansprüche 1 bis 9,
wobei das Spannelement einerseits mit dem Anschlagelement und andererseits mit dem Gegenelement (5) verbunden und von dem Verformungsrohr (1) aufgenommen ist.

11. Verwendung der Energieverzehrvorrichtung (20) nach einem der vorhergehenden Ansprüche in einer Stoßsicherung (100) im Untergestell oder in einer Wagenkastenstruktur eines spurgeführten Fahrzeuges, insbesondere Schienenfahrzeuges.

## Claims

1. An energy absorption device (20), particularly for a shock absorber (100) of a track-guided vehicle, comprising an energy-absorbing element in the form of a deformation tube (1) and a counter element (5) which interacts with the deformation tube (1) such that upon a critical impact force introduced into the energy absorption device (20) being exceeded, the counter element (5) and the deformation tube (1) relatively move toward one another while at least part of the impact energy introduced into the energy absorption device (20) is simultaneously absorbed,
wherein the deformation tube (1) comprises a first deformation tube section (2) and an oppositely disposed second deformation tube section (4), wherein the second deformation tube section (4) has a widened cross section compared to the first deformation tube section (2), and wherein the counter element (5) is at least partially received in the second deformation tube section (4), wherein the counter element (5) is positively connected to the deformation tube (1) in the circumferential direction of the deformation tube (1) to prevent twisting of the counter element (5) relative to the deformation tube (1),
**characterized in that**
at least one recess (6), particularly a groove or a notch, extending parallel to the longitudinal axis (L) of the deformation tube (1) is provided over at least part of the inner surface of the deformation tube (1) to form a positive connection with a guide rail (7'), particularly a parallel key, configured complementary to the recess (6) provided on the counter element (5), or wherein a guide rail (7), particularly a parallel key, is provided over at least part of the inner surface of the deformation tube (1) parallel to the longitudinal axis (L) of the deformation tube (1) to form a positive connection with a recess (6'), particularly a groove or a notch, configured complementary to the guide rail (7) provided in the counter element (5), or wherein a fluting in the form of ripples having recesses (6) running parallel to the longitudinal axis (L) of the deformation tube (1) is provided over at least part of the inner surface of the deformation tube (1) to form a positive connection with a correspondingly configured fluting provided on the counter element (5).

2. The energy absorption device (20) according to claim 1,
wherein the guide rails (7, 7') have a rectangular, triangular or rounded cross section.

3. The energy absorption device (20) according to claim 1 or 2,
wherein the first deformation tube section (2) is connected to the second deformation tube section (4) by means of a shoulder region (3), and wherein the counter element (5) comprises a conical ring (8) having a lateral surface tapering toward the first deformation tube section (2) which abuts the inner surface of the deformation tube (1) in the shoulder region (3).

4. The energy absorption device (20) according to claim 3,
wherein the conical ring (8) comprises a guide element (9) which abuts the inner surface of the first deformation tube section (2).

5. The energy absorption device (20) according to claim 4,
wherein the guide element (9) is of annular configuration and has a longitudinal axis (L') which corresponds to the longitudinal axis (L) of the deformation tube (1).

6. The energy absorption device (20) according to claim 5,
wherein at least one groove-shaped recess (6) extending parallel to the longitudinal axis (L) of the deformation tube (1) is provided in the annular guide element (9) to form a positive connection with a projecting region provided in the inner surface of the first deformation tube section (2) and running parallel to the longitudinal axis (L) of the deformation tube (1) which is configured complementary to the groove-shaped recess and serves as a guide rail (7).

7. The energy absorption device (20) according to any one of claims 1 to 6,
wherein the deformation tube (1) is configured so as to plastically deform by expanding in cross section upon a critical impact force introduced into the deformation tube (1) being exceeded and allow the relative movement of the deformation tube (1) and the counter element (5).

8. The energy absorption device (20) according to claim 7,
wherein the characteristic impact force to actuate the deformation tube (1) is predefinable by means of the wall thickness and/or the material of the deformation tube (1) and/or by the degree of expansion of the deformation tube (1).

9. The energy absorption device (20) according to any one of claims 1 to 8,
wherein the deformation tube (1) is braced between the counter element (5) and a stop element by means of at least one tensioning element such that a defined pretension is exerted on the deformation tube (1), by means of which the response behavior of the energy absorption device (20) can be predefined.

10. The energy absorption device (20) according to any one of claims 1 to 9,
wherein the tensioning device is connected to the stop element on one side and to the counter element (5) on the other and is received by the deformation tube (1).

11. Use of the energy absorption device (20) according to any one of the preceding claims in a shock absorber (100) in the undercarriage or in the structure of a railcar body of a track-guided vehicle, in particular a rail vehicle.

## Revendications

1. Dispositif de dégradation d'énergie (20), en particulier pour une protection antichoc (100) d'un véhicule guidé sur voie, comprenant un élément de dégradation d'énergie réalisé sous la forme d'un tube à déformation (1) et d'un élément antagoniste (5) qui coopère avec le tube à déformation (1) de telle manière que lors du dépassement d'une force de choc critique appliquée dans le dispositif de dégradation d'énergie, l'élément antagoniste (5) et le tube à déformation (1) se déplacent relativement l'un en direction de l'autre en dégradant simultanément au moins une partie de l'énergie de choc appliquée dans le dispositif de dégradation d'énergie (20),
dans lequel le tube à déformation (1) comprend un premier tronçon de tube à déformation (2) et un second tronçon de tube à déformation (4) opposé, tels que le second tronçon de tube à déformation (4) est doté d'une section élargie par comparaison au premier tronçon de tube à déformation (2), et tels que l'élément antagoniste (5) et reçu au moins partiellement dans le second tronçon de tube à déformation (4), et l'élément antagoniste (5) est relié au tube à déformation (1) via une liaison à coopération de formes en direction périphérique du tube à déformation (1) pour empêcher une rotation de l'élément antagoniste (5) par rapport au tube à déformation (1),
**caractérisé en ce que**
il est prévu sur la surface enveloppe intérieure du tube à déformation (1) au moins localement au moins un renfoncement (6), en particulier une gorge ou une rainure, qui s'étend parallèlement à l'axe longitudinal (L) du tube à déformation (1), pour réaliser une liaison à coopération de formes avec un rail (7'), en particulier une languette ajustée, prévu sur l'élément antagoniste (5) et réalisé de manière complémentaire au renfoncement (6),
ou bien il est prévu sur la surface enveloppe intérieure du tube à déformation (1) au moins localement au moins un rail (7), en particulier une languette ajustée, s'étendant parallèlement à l'axe longitudinal (L) du tube à déformation (1), pour réaliser une liaison à coopération de formes avec un renfoncement (6'), en particulier une gorge ou une rainure, réalisé dans l'élément antagoniste (5) et réalisé de manière complémentaire au rail (7),
ou encore il est prévu sur la surface enveloppe intérieure du tube à déformation (1) au moins localement des stries avec des renfoncements (6) s'étendant parallèlement à l'axe longitudinal (L) du tube à déformation (1), sous la configuration de stries, pour réaliser une liaison à coopération de formes avec des stries complémentaires prévues sur l'élément antagoniste (5).

2. Dispositif de dégradation d'énergie (20) selon la revendication 1,
dans lequel le rail (7, 7') présente une section transversale rectangulaire, triangulaire ou arrondie.

3. Dispositif de dégradation d'énergie (20) selon la revendication 1 ou 2,
dans lequel le premier tronçon de tube à déformation (2) est relié via une zone d'épaulement (3) avec le second tronçon de tube à déformation (4), et dans lequel l'élément antagoniste (5) comprend une bague conique (8) avec une surface enveloppe qui converge de manière conique en direction du premier tronçon de tube à déformation (2) et qui s'applique dans la zone d'épaulement (3) contre la surface enveloppe intérieure du tube à déformation (1).

4. Dispositif de dégradation d'énergie (20) selon la revendication 3,
dans lequel la bague conique (8) comprend un élément de guidage (9) qui s'applique contre la surface enveloppe intérieure du premier tronçon de tube à déformation (2).

5. Dispositif de dégradation d'énergie (20) selon la revendication 4,
dans lequel l'élément de guidage (9) est réalisé sous forme annulaire et comporte un axe longitudinal (L') qui coïncide avec l'axe longitudinal (L) du tube à déformation (1).

6. Dispositif de dégradation d'énergie (20) selon la revendication 5,
dans lequel au moins un renfoncement en forme de gorge (6) s'étendant parallèlement à l'axe longitudinal (L) du tube à déformation (1) est prévu dans l'élément de guidage (9) de forme annulaire, pour réaliser une liaison à coopération de formes avec une zone en saillie, ménagée dans la surface enveloppe intérieure du premier tronçon de tube à déformation (2) et s'étendant parallèlement à l'axe longitudinal (L) du tube à déformation (1), zone qui est réalisée de manière complémentaire au renfoncement en forme de gorge et qui sert de rail (7).

7. Dispositif de dégradation d'énergie (20) selon l'une des revendications 1 à 6,
dans lequel le tube à déformation (1) est réalisé de telle façon que lors d'un dépassement d'une force de choc critique appliquée dans le tube à déformation (1) il se déforme de manière plastique avec élargissement de sa section transversale, et autorise le mouvement relatif du tube à déformation (1) et de l'élément antagoniste (5).

8. Dispositif de dégradation d'énergie (20) selon la revendication 7,
dans lequel la force de choc caractéristique pour la réaction du tube à déformation (1) est réglable au préalable par l'épaisseur de paroi et/ou par le matériau du tube à déformation (1) et/ou via le degré d'élargissement du tube à déformation (1).

9. Dispositif de dégradation d'énergie (20) selon l'une des revendications 1 à 9,
dans lequel le tube à déformation (1) est serré entre l'élément antagoniste (5) et un élément de butée via au moins un élément de serrage, de telle façon qu'il s'exerce une précontrainte définie sur le tube à déformation (1), via laquelle le comportement de réaction du dispositif de dégradation d'énergie (20) peut être préalablement fixé.

10. Dispositif de dégradation d'énergie (20) selon l'une des revendications 1 à 9,
dans lequel l'élément de serrage est relié d'une part avec l'élément de butée et d'autre part avec l'élément antagoniste (5) et est reçu par le tube à déformation (1).

11. Utilisation du dispositif de dégradation d'énergie (20) selon l'une des revendications précédentes dans une protection antichoc (100) dans le châssis ou dans une structure de caisse de wagon d'un véhicule guidé sur voie, en particulier d'un véhicule ferroviaire.
